**Europäisches Patentamt**

**European Patent Office**

**Office européen des brevets**

(19)

(11) Veröffentlichungsnummer: **0 356 870**

**A1**

(12) # EUROPÄISCHE PATENTANMELDUNG

(21) Anmeldenummer: **89115420.5**

(22) Anmeldetag: **22.08.89**

(51) Int. Cl.⁵: **C02F 3/06 , C02F 3/12 , C02F 3/28**

(30) Priorität: **31.08.88 DE 3829497**

(43) Veröffentlichungstag der Anmeldung:
**07.03.90 Patentblatt 90/10**

(84) Benannte Vertragsstaaten:
**AT BE CH DE FR GB IT LI NL**

(71) Anmelder: **Kernforschungsanlage Jülich GmbH**
**Wilhelm-Jonen-Strasse**
**D-5170 Jülich(DE)**

(72) Erfinder: **Mohn, Friedrich-Helmuth, Dr.**
**Franziskusstrasse 4**
**D-5170 Jülich(DE)**
Erfinder: **Reich-Walber, Michael**
**Lütticher Strasse 5**
**D-5100 Aachen(DE)**

(54) **Verfahren und Vorrichtung zur biotechnologischen Behandlung von Flüssigkeiten in einem vertikalen Schüttkörperbett.**

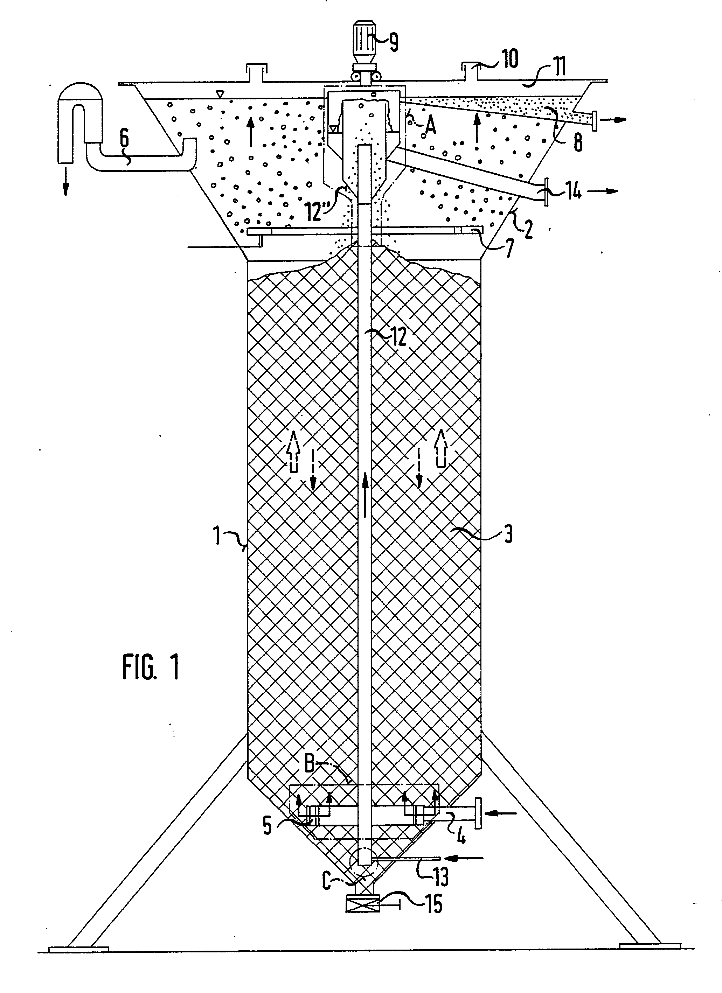

(57) Für die Durchführung biotechnologischer Prozesse in einem vertikalen Bett von biomasse-bewachsenen Trägerkörpern, von dem kontinuierlich oder wiederkehrend Trägerkörper am unteren Ende abgezogen und unter gleichzeitiger Abtrennung überschüssiger Biomasse zum oberen Ende zurückbefördert werden, eignet sich eine Vorrichtung, die einen Behälter (1) mit einem vertikalen Bett (3) umfaßt, der einen unteren Flüssigkeitszulauf (4, 5) und einen oberen Flüssigkeitsablauf (6) oberhalb des Bettes (3) aufweist sowie zumindest ein vorzugsweise axiales beidseits offenes Rohr (12), durch das biomasse-beladene Trägerkörper durch entsprechende Gas- oder Flüssigkeitseinspeisung (13) oder mittels einer Förderschnecke (22), vom unteren Bettende bis über das obere Bettende befördert werden. Das obere Ende des Rohrs (12) endet in einem abgetrennten querschnittserweiterten Raum (12″), in dem eine Absonderung der Trägerkörper, die unter der Wirkung der Schwerkraft zum Bett (3) zurückfallen, von der suspendierten abgescherten Biomasse stattfindet, die als Biomassekonzentrat gesondert (bei 14) abläuft (Figur 1).

FIG. 1

## Verfahren und Vorrichtung zur biotechnologischen Behandlung von Flüssigkeiten in einem vertikalen Schüttkörperbett

Die Erfindung bezieht sich auf ein biotechnologisches Verfahren zur Behandlung von Flüssigkeiten in einem vertikalen Bett von biomasse-bewachsenen Trägerkörpern, das von der zu behandelnden Flüssigkeit im wesentlichen senkrecht durchströmt wird sowie auf eine Vorrichtung zur Durchführung des Verfahrens.

Sie bezieht sich insbesondere auf die kontinuierliche biologische Aufbereitung, insbesondere Denitrifikation, von Trink- und Abwässern sowie allgemein auf biotechnologische Umwandlungen mittels trägerfixierter Mikroorganismen.

Die Umsetzung von Flüssigkeiten unter Verwendung von Mikroorganismen bietet einige grundsätzliche Probleme: Bei Anwendung von Biomassen ohne Trägermaterial bildete deren Abtrennung vom Produktstrom mittels aufwendiger Membrantechniken eine nicht unerhebliche Schwierigkeit. Bekannt ist daher die Verwendung von Trägerkörpern aus unterschiedlichen anorganischen und organischen Materialien wie Glas, Keramik, Schotter, Polystyrol, Polyacrylamid und dergleichen, die in Form von Schüttkörperbetten verwendet werden und auf deren Oberfläche die Biomasse aufgewachsen ist und mehr oder minder fest haftet.

Bei kontinuierlichen Verfahren, die mit solchen biomasse-bewachsenen Trägerkörperbetten arbeiten, kommt es aufgrund der Zunahme der Biomasse mehr oder minder rasch zu Verstopfungserscheinungen und Kanalbildungen, denen entgegengewirkt werden muß.

Es ist daher bekannt, solche Schüttkörperbetten wiederkehrend unter Betriebsunterbrechung durchzuspülen um Überschußbiomassen zu beseitigen (DE-OS 35 08 274). Es wirde auch bereits vorgeschlagen, Trägerkörper am unteren Ende eines vertikalen Schüttkörperbetts auszuschleusen und nach Abtrennung von Überschußbiomasse am oberen Ende in das Bett zurückzugeben (DE-Patentanmeldung 37 26 949.6).

Nach einem weiteren Verfahren der Anmelderin wird das biomasse-bewachsene Schüttkörperbett in einem im wesentlichen horizontalen drehbar gelagerten Behälter unter Freilassung eines Restvolumens von etwa 10 bis 35 % vorgesehen, der in langsamer Dreh- oder Schaukelbewegungen versetzt wird, woraus ein stetiger gewisser Abrieb von Biomasse resultiert, die zusammen mit der Flüssigkeit aus dem Reaktor abgeht und dann jedoch vom Produktstrom getrennt werden muß.

Diese bekannten Verfahren haben in der einen oder anderen Weise gewisse Nachteile. Der Erfindung liegt daher die Aufgabe zugrunde ein Verfahren zur biotechnologischen Behandlung von Flüssigkeiten im biomasse-bewachsenen Trägerbett vorzusehen, bei dem kontinuierlich gearbeitet werden kann, Vertstopfungen vermieden werden und eine umfangreiche Nachbehandlung des Produktstroms vermieden werden kann.

Das erfindungsgemäße Verfahren der eingangs genannten Art, mit dem dies erreicht werden kann, ist im wesent lichen dadurch gekennzeichnet, daß ein geringer Anteil der bewachsenen Trägerkörper kontinuierlich oder wiederkehrend vom unteren Ende des Bettes derart unter der Einwirkung von Scherkräften aufwärts bis über das obere Ende des Bettes befördert wird, daß eine Ablösung von Biomasse vom Träger erfolgt, die gesondert als konzentrierte Suspension fortgeführt wird, während die Trägerkörper unter der Wirkung der Schwerkraft zum Bett zurückgelangen.

Die Erfindung betrifft mithin im wesentlichen die Anwendung eines vertikalen Füllkörperbetts, das insbesondere von unten nach oben von der zu behandelnden Flüssigkeit durchströmt wird und bei dem die Ansammlung von überschüssiger Biomasse dadurch vermieden wird, daß fortlaufend (intermittierend oder insbesondere kontinuierlich) biomasse-bewachsene Trägerkörper vom unteren Ende des Bettes zum oberen unter gleichzeitiger Einwirkung von Scherkräften transportiert werden, die ausreichen, überschüssige Biomasse abzutrennen, so daß nach der Aufwärtsbewegung "gereinigte" Trägerkörper auf das obere Ende des Bettes "zurückfallen", das auf diese Weise stetig einer Erneuerung unterliegt.

Simultan mit der Aufwärtsbewegung findet die Abtrennung der Überschußbiomasse von den Trägerkörpern statt, die als Konzentrat gesondert abgeführt wird.

Bei einem unter der Wirkung der Schwerkraft stehenden vertikalen Schüttkörperbett kann ggf. allein durch insbesondere axial gerichtetes Einblasen eines Gas-oder Flüssigkeitsstrahls für einen stetigen Aufwärtstransport geringer Anteile der Schüttkörper gesorgt werden. Vorzugsweise wird jedoch mit zumindest einem vertikalen Rohr bzw. vertikal angeordneten Steigrohr gearbeitet, das vom unteren Ende des Bettes bis über dessen oberes Ende reicht und so dimensioniert ist, daß beim Aufwärtstransport ausreichende Scherkräfte zur Abtrennung von Biomasse auftreten. D. h., Anzahl, Höhe und Durchmesser sowie ggf. im Rohr vorgesehene Einbauten werden so gewählt, daß mit dem Transport gleichlaufend die gewünschte Biomasseabtrennung erfolgt.

Vorzugsweise ist bzw. sind das oder die Rohr(e) innerhalb des Bettes vorgesehen, wobei ein einziges axiales Vertikalrohr bevorzugt wird, in dem die Aufwärtsbewegung der biomasse-bewachsenen Trägerkörper stattfindet. Diese kann durch Gas- oder Flüssigkeitslift (Mammutpumpenwirkung) oder mittels einer vertikalen Schnecke mit entsprechender Steigung und Drehzahl erreicht werden.

Zwar ist aus der DE-OS 32 28 365 eine Anordnung zur Regenerierung bzw. Reinigung von Trägerkörpern einer (an eine Behandlungszone anschließenden) Filterzone bekannt, bei der die Trägerkörper ggf. durch Mammutpumpenwirkung vom unteren Ende der Filterzone nach oben befördert werden. Die eigentliche Reinigung schließt sich jedoch erst daran an, indem die insbesondere aus organischen Polymeren, wie Polyuretanschaumstoff, bestehenden Trägerkörper durch Zusammenpressen und/oder heftiges Begasen von Biomasse und Feststoffen befreit werden und über eine Rückführeinrichtung laufen. Erfindungsgemäß wird demgegenüber die Biomasseab trennung unmittelbar durch den unter ausreichender Scherwirkung stattfindenden Aufwärtstransport erzielt.

Das untere Ende des Schüttkörperbetts ist insbesondere konisch zulaufend gestaltet, wodurch Toträume von aufwärts zu förderndem Material weitgehend vermieden werden.

Am oberen Ende des Steigrohres oberhalb des Bettes erfolgt einer Absonderung der Trägerkörper von der aufgeschlämmten Biomasse, insbesondere durch Siebwirkung oder aufgrund von Auftriebsunterschieden. Dazu mündet beispielsweise das obere Rohrende in einer vom übrigen Reaktorraum abgeschirmten erweiterten Zone, von der aus die Trägerkörper ungehindert ggf. geführt durch ein kegelförmiges Leitblech zum Bett zurückgelangen, während das Biomassekonzentrat in einen Überfang ausläuft und von dort fortgeführt wird.

Der Anteil der aufwärts bewegten Trägerkörper relativ zum Gesamtbett sollte den jeweiligen Prozeßbedingungen im Hinblick auf die Einhaltung eines optimalen Biomasse-Bewuchses innerhalb des Hauptbettes angepaßt werden. Üblicherweise liegt dieser Anteil bei kontinuierlicher Förderung nicht über 20 %, insbesondere zwischen 0,1 und 5 % und speziell im Bereich von 0,5 bis 1 % der gesamten Trägerkörper des Bettes.

Anstelle einer kontinuierlichen Durchschleusung von zu reinigenden Trägerkörpern durch das oder die Steigrohr(e) kann selbstverständlich auch mit schubweiser Reinigung - je nach Bedarf - gearbeitet werden. Eine solche Betriebsweise zeichnet sich durch größere Flexibilität bei bestehender Apparatur aus, jedoch können dann ggf. bei lebhafter Biomassebildung Probleme durch "Zusammenbacken" oder "Klumpen" von bewachsenem Trägerkörpermaterial im unteren Bereich des Reaktors auftreten. Ein schubweise Betrieb ist insbesondere bei Prozessen mit langsam wachsenden Mikroorganismen angezeigt.

Zu beachten ist generell, daß je nach Korngröße und spezifischem Gewicht der zu reinigenden Trägerkörper unterschiedliche Förderbedingungen zu wählen sind. Werden relativ kleine Trägerkörper mit nur geringem Dicheunterschied gegenüber der Flüssigkeit gefördert, so reichen ggf. die im Steigrohr auftretenden Scherkräfte für die gewünschte Biomasseabtrennung nicht aus. Insbesondere in solchen Fällen können schikanenartige Einbauten oder Querschnittsveränderungen innerhalb des oder der Vertikalrohre(s) für eine erhöhte Durchwirbelung und verstärkte Biomasseabtrennung vorgesehen sein.

Besonders zweckmäßig ist der biomasseabscherende Aufwärtstransport bewachsener Trägerkörper in einem axialen Steigrohr, jedoch können bei Reaktoren mit großem Querschnitt auch mehrere, insbesondere symmetrisch angeordnete Rohre (mit jeweils angepaßten Einlaufstrecken am Reaktorboden) vorgesehen sein.

Eine abschließende Begasung der behandelten Flüssigkeit kann zweckmäßigerweise unmittelbar innerhalb des Reaktors vorgenommen werden und/oder eine zusätzliche Flotationsbehandlung zur weiteren Biomasseabtrennung aus dem Produktstrom ggf. unter Einbeziehung der Gaszufuhr für eine abschließende Begasung.

Weitere Besonderheiten der vorliegenden Erfindung gehen aus den Patentansprüchen sowie der nachfolgenden Beschreibung von Ausführungsbeispielen anhand der beigefügten Zeichnungen hervor.

Diese zeigen schematisch:

Figur 1 einen erfindungsgemäßen Vertikalbettreaktor mit aufwärts führendem Axialrohr für die Aufwärtsförderung von Trägerkörpern mittels Gaslift;

Figur 2 eine Abwandlung der in Figur 1 gezeigten Anordnung mit Vertikalschnecke zur Aufwärtsförderung von Trägerkörpern;

Figur 3 den in Figur 1 mit A markierten Trennteil in vergrößertem Maßstab;

Figur 4 das obere Ende der Vertikalschnecke mit Abscheidebereich des Reaktors gemäß Figur 2;

Figur 5 die Gas- bzw. Luftzufuhr am unteren Ende des Rohres im Reaktor gemäß Figur 1; und

Figur 6 einen Flüssigkeitsverteilerring, der am unteren Ende des Reaktors gemäß Figur 1 oder 2 vorgesehen sein kann.

Figur 1 zeigt einen nach unten konisch zulaufenden Behälter 1 mit oberer konischer Erweiterung 2, der mit einem Bett 3 von biomasse-bewachsenen Trägerkörpern gefüllt ist. Das Bett 3 wird von wäßriger Phase aufwärts durchströmt, die bei 4 über einen Ringverteiler 5 zuströmt.

Im oberen konisch erweiterten Raum findet eine Verlangsamung des Produktstrommes statt, der über einen höhenverstellbaren Ablauf 6 abläuft. Über dem Bett 3 ist eine Begasungseinrichtung 7 vorgesehen, mit deren Hilfe der Produktstrom begast werden kann, wobei ggf. gleichzeitig eine Flotationstrennung von mitgeführter Biomasse möglich ist, die über einen Flotatabscheider 8 fortgeführt wird, der von einem Motor 9 angetrieben wird. Mit 10 sind Gasabgabestutzen bezeichnet, über die das in Raum 11 gesammelte Gas aus dem abgedeckten Behälter entweichen kann.

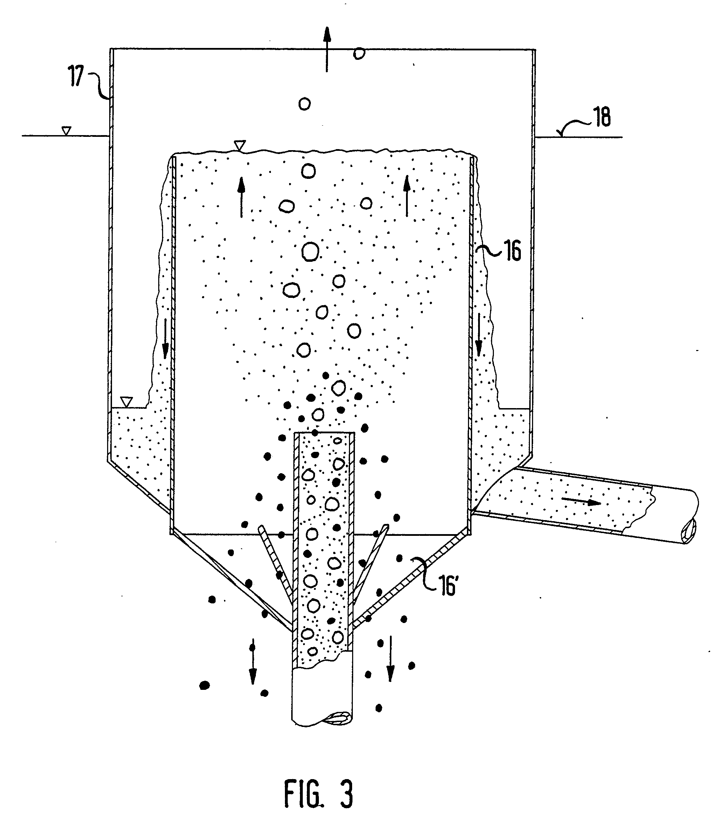

Durch das Bett 3 führt ein beidseits offenes axiales Rohr 12, an dessen unterem Ende Druckluft bei 13 eingeblasen wird, so daß im Rohr 12 nach Art einer Mammutpumpenförderung biomasse-bewachsene Trägerkörper im schnellen Strom aufwärts befördert werden, die dabei gleichzeitig einer gewissen Scherwirkung unterliegen, was zur Abtrennung von überschüssiger Biomasse vom Trägermaterial führt. Das Rohr 12 ragt über das obere Ende des Bettes 3 hinaus und mündet in einem erweiterten Überfang 12″, der in Figur 3 näher ausgeführt ist. Der rasche Aufwärtsstrom wird in diesem Bereich verlangsamt, so daß eine Absonderung der unter der Wirkung der Schwerkraft zum Bett zurückgelangenden Trägerkörper vom Biomassekonzentrat erfolgt, das bei 14 fortgeführt wird.

Mit 15 ist schließlich ein unterer Ablaß zur Entleerung des Behälters 1 (mit konischem Ende 1′) bezeichnet.

Wie aus Figur 3 im einzelnen hervorgeht, endet das axiale Rohr 12 in einem unten offenen Rohrstutzen 16, in dem eine Trennung des aus dem Axialrohr austretenden Stroms stattfindet: das Trägermaterial fällt auf das Bett zurück. Gasblasen steigen aufwärts und werden in den Gasraum entlassen, während Biomassekonzentrat am oberen Ende überläuft in einen Ringbecher 17 mit unterem Ablauf 14 zur Fortführung von Biomassekonzentrat. Der Flüssigkeitsspiegel 18 am Behälter 1 (der über den Produktstromablauf 16 eingestellt werden kann) wird geringfügig höher gewählt als die Oberkante des Stutzens 16, so daß keine Gefahr eines Übertritts von Biomassekonzentrat in den Produktstrombereich oberhalb des Bettes 3 besteht, vielmehr sorgt ein ständig bei 16′ zutretender geringer Anteil des Produktstroms dafür, daß nur die Trägerkörper zum Bett zurückgelangen, während das Biomassekonzentrat über die Überlaufkante des Rohrstutzens 16 abgetrieben wird.

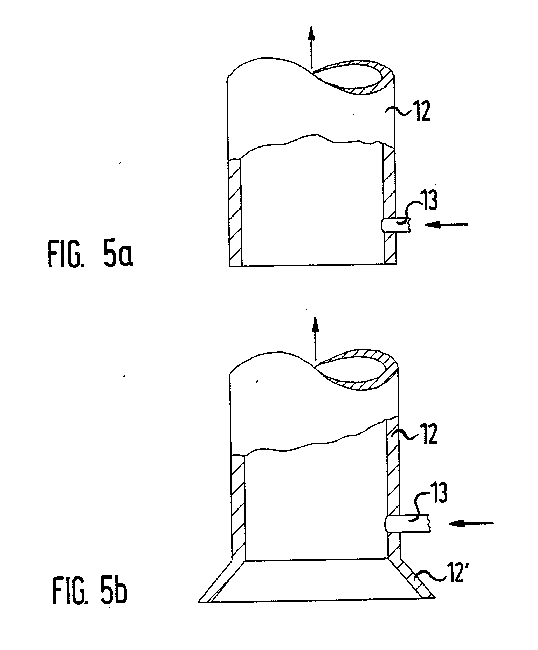

Figur 5 zeigt den unteren Einlauf des beidseits offenen Rohres 12, das inbesondere wie in (b) dargestellt ist, nach unten konisch erweitert (12′) sein kann. Das untere Ende des Rohres 12 reicht bis in die Nähe des unteren Behälterendes, so daß praktisch keine Toträume für Trägermaterial existieren.

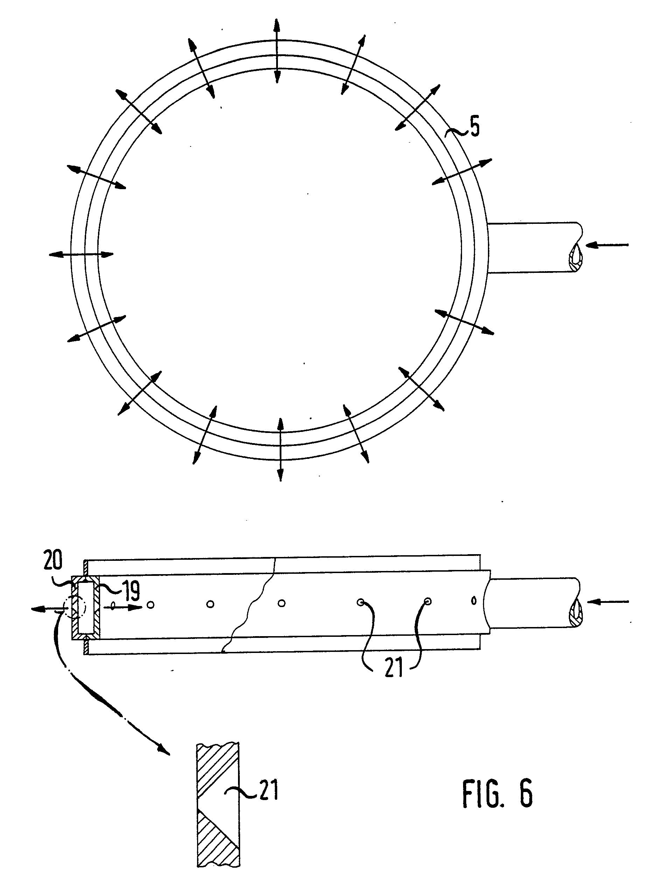

In Figur 6 ist der Ringverteiler 5 für die zu behandelnde Flüssigkeit mehr im einzelnen gezeigt, dessen zylindrische Mantelflächen 19, 20 mit einer Vielzahl von konischen Bohrungen 21 versehen sind, deren verjüngtes Ende zum Bett 3 hinweist.

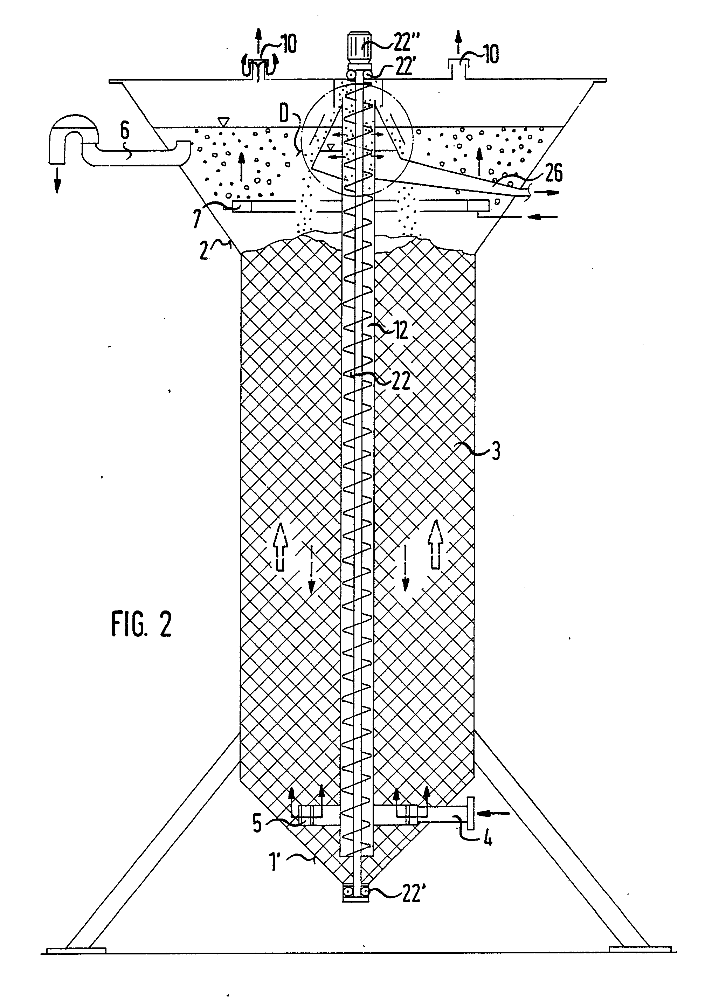

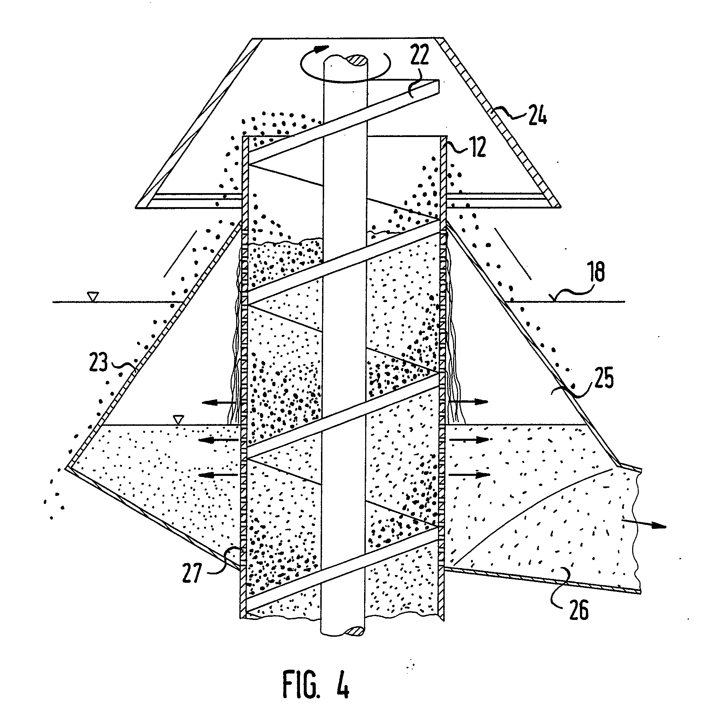

Figur 2 zeigt eine alternative Ausführungsart der erfindungsgemäßen Vorrichtung, bei der im Rohr 12 eine vertikale Förderschnecke 22 (mit oberer und unterer Lagerung 22′ und Antrieb 22″) vorgesehen ist, deren oberes Ende mit Absonderungsraum in Figur 4 näher ausgeführt ist:

Wie gezeigt, ragt das Axialrohr 12 in diesem Falle über den Flüssigkeitsspiegel 18 hinaus. Am oberen Ende des Rohrs 12 endet die Schnecke 22, so daß aufwärts gefördertes Trägermaterial längs der konischen Führung 23, deren Winkel steiler ist als der Böschungswinkel des Materials, zum Bett 3 zurückgelangen kann.

Ein unten offener Fangstutzen 24, der insbesondere konisch nach oben verjüngt sein kann (wie in Figur 4 gezeigt wird), ragt über das Schneckenende hinaus und sorgt für eine gesammelte Abführung der Trägerkörper zum Bett hin.

Der Leitkonus 23 gehört zu dem abgeschlossenen Raum 25 mit Ablauf 26 für Biomassekonzentrat. Im Bereich des Konzentratabführungsraumes 25 ist der Rohrmantel des Rohres 12 durch Bohrungen 27 perforiert, über die Biomassekonzentrat ablaufen kann, während die gröberen Trägerkörper im Rohr zurückgehalten werden.

Wie aus Figur 4 hervorgeht, ist bei der Ausführung der erfindungsgemäßen Vorrichtung mit Förderschnecke ein Übertritt von Biomassekonzentrat in den Produktstrombereich praktisch nicht möglich.

## Ansprüche

1. Biotechnologisches Verfahren zur Behandlung von Flüssigkeiten in einem vertikalen Bett von biomasse-bewachsenen Trägerkörpern, das von der zu behandelnden Flüssigkeit im wesentlichen senkrecht durchströmt wird, **dadurch gekennzeichnet,** daß ein geringer Anteil der bewachsenen Trägerkörper kontinuierlich oder wiederkehrend vom unteren Ende des Bettes derart unter der Einwirkung von Scherkräften aufwärts bis über das obere Ende des Bettes befördert wird, daß eine Ablösung von Biomasse vom Träger erfolgt, die gesondert als konzentrierte Suspension fortgeführt wird, während die Trägerkörper unter der Wirkung der Schwerkraft zum Bett zurückgelangen.

2. Verfahren nach Anspruch 1, **dadurch gekennzeichnet,** daß die Aufwärtsbewegung durch Gas- oder Flüssigkeitslift oder mittels einer vertikalen Schnecke in einem oder mehreren, von unten nach oben durch das Bett führenden, beidseitig offenen Rohr(en) erfolgt, dessen bzw. deren oberes Ende über das obere Bettende hinausragt.

3. Verfahren nach Anspruch 2,
**dadurch gekennzeichnet,**
daß die Aufwärtsbewegung in einem axialen Rohr erfolgt.

4. Verfahren nach einem der Ansprüche 1 bis 3,
**dadurch gekennzeichnet,**
daß der aufwärtsbewegte Anteil relativ zum Bett so gewählt wird, daß sich ein für den jeweiligen Prozeß optimaler Biomassebewuchs auf den eingesetzten Trägerkörpern im Bett einstellt.

5. Verfahren nach Anspruch 4,
**dadurch gekennzeichnet,**
daß der in Aufwärtsbewegung befindliche Anteil der Trägerkörper bei kontinuierlichem Reinigungsbetrieb zwischen 0,1 % und 5 %, insbesondere im Bereich von 0,5 % bis 1 %, bezogen auf das Gesamtbett, gewählt wird.

6. Verfahren nach Anspruch 2,
**dadurch gekennzeichnet,**
daß im Rohr durch Querschnittsveränderungen und/oder schikanenartige Einbauten für eine erhöhte Durchwirbelung des Trägermaterials und damit Ablösung der Biomasse gesorgt wird.

7. Verfahren nach einem de vorangehenden Ansprüche,
**dadurch gekennzeichnet,**
daß eine zusätzliche Begasungseinrichtung oberhalb des Schüttbettes vorzugsweise für einen feinperligen Gaseintrag installiert wird.

8. Verfahren nach Anspruch 7,
**dadurch gekennzeichnet,**
daß im Raum oberhalb des Bettes eine zusätzliche Bismasseabtrennung vom Produktstrom durch Flotation erfolgt.

9. Verfahren nach Anspruch 7 und 8,
**dadurch gekennzeichnet,**
daß die Flotation mit Hilfe des Gasstroms der Begasungseinrichtung unter Einbeziehung der vom Trägerkörperbett entweichenden Prozeßgases gesteuert wird.

10. Vorrichtung zur Durchführung von biotechnologischen Verfahren nach einem der vorangehenden Ansprüche,
**gekennzeichnet durch**
einen Behälter (1) mit einem vertikalen Bett (3) von biomasse-bewachsenen Trägerkörpern mit unterem Flüssigkeitszulauf (4, 5) und oberem Flüssigkeitsablauf (G) oberhalb des Bettes sowie zumindest einem beidseits offenen Rohr (12) mit Gas- oder Flüssigkeitseinspeisung (13) für eine Aufwärtsförderung von biomasse-beladenen Trägerkörpern oder einer Förderschnecke (22), das vom unteren Bettende bis über das obere Bettende reicht und in einem abgetrennten, querschnittserweiterten Raum endet, der mit dem oberen Ende des Bettes derart in Verbindung steht, daß die Trägerkörper ungehindert unter der Wirkung der Schwerkraft zum Bett zurückgelangen und durch einen Auffang (16, 17 bzw. 25) für Biomassekonzentrat am oberen Rohrende mit einer aus dem Reaktor führenden Ableitung (14 bzw. 26) für Biomassekonzentrat, wobei das (zumindest eine) Rohe (12) derart dimensioniert ist, daß beim Aufwärtstransport der Trägerkörper eine ausreichende Abtrennung von Biomasse erfolgt.

11. Vorrichtung nach Anspruch 10,
**gekennzeichnet durch**
ein axiales Rohr (12) zur Aufwärtsförderung der Trägerkörper.

12. Vorrichtung nach Anspruch 10 oder 11,
**gekennzeichnet durch**
eine konische Erweiterung (12') des unteren Rohrendes.

13. Vorrichtung nach einem der Ansprüche 10 bis 12,
**gekennzeichnet durch**
eine Gaszufuhreinrichtung mit Verteiler (7) oberhalb des Bettes (3) für eine Begasung des Produktstromes.

14. Vorrichtung nach einem der Ansprüche 10 bis 13,
**gekennzeichnet durch**
eine konische Erweiterung (2) des Behälters oberhalb des Bettes.

15. Vorrichtung nach einem der Ansprüche 10 bis 14,
**gekennzeichnet durch**
eine Verlängerung des Behälters oberhalb des Bettes um etwa 1 bis 3 m.

16. Vorrichtung nach einem der Ansprüche 10 bis 15,
**gekennezeichnet durch**
Einrichtungen (7 - 9) zur Flotationstrennung mitgenommener Biomasse im Raum oberhalb des Bettes.

FIG. 1

FIG. 2

FIG. 3

FIG. 4

FIG. 5a

FIG. 5b

FIG. 6

**Europäisches Patentamt**

# EUROPÄISCHER RECHERCHENBERICHT

Nummer der Anmeldung

EP 89 11 5420

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 105 788 (DEGREMONT) * Seite 2, Zeile 15 - Seite 3, Zeile 9; Figur * | 1-4,6 | C 02 F 3/06 C 02 F 3/12 C 02 F 3/28 |
| A | --- | 10,11 | |
| X,P | EP-A-0 306 431 (SOGEA) * Seite 3, Zeilen 8-46; Figur * | 1-4,6, 10,11 | |
| A,P | --- | 7,13 | |
| X,P | FR-A-2 623 794 (SOGEA) * Seite 2, Zeile 35 - Seite 3, Zeile 9; Seite 3, Zeile 34 - Seite 4, Zeile 6; Seite 5, Zeilen 1-5; Seite 5, Zeile 36 - Seite 6, Zeile 4 * | 1-4,6, 11 | |
| A,P | ----- | 7,10,13 | |

**RECHERCHIERTE SACHGEBIETE (Int. Cl.5)**

C 02 F

Der vorliegende Recherchenbericht wurde für alle Patentansprüche erstellt

| Recherchenort | Abschlußdatum der Recherche | Prüfer |
|---|---|---|
| DEN HAAG | 08-11-1989 | GONZALEZ Y ARIAS M.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)